(19) Europäisches Patentamt
European Patent Office
Office européen des brevets

(11) EP 1 290 075 B1

(12) # EUROPÄISCHE PATENTSCHRIFT

(45) Veröffentlichungstag und Bekanntmachung des Hinweises auf die Patenterteilung:
**16.06.2010 Patentblatt 2010/24**

(21) Anmeldenummer: **01931697.5**

(22) Anmeldetag: **17.05.2001**

(51) Int Cl.:
***C08K 5/00*** *(2006.01)* ***C08L 25/12*** *(2006.01)*
***C08L 55/02*** *(2006.01)* *C08K 5/098 (2006.01)*
*C08K 5/13 (2006.01)* *C08K 5/38 (2006.01)*
*C08L 71/02 (2006.01)*

(86) Internationale Anmeldenummer:
**PCT/EP2001/005611**

(87) Internationale Veröffentlichungsnummer:
**WO 2001/092391 (06.12.2001 Gazette 2001/49)**

(54) **STABILISIERTE THERMOPLASTISCHE FORMMASSEN**
STABILIZED THERMOPLASTIC MOULDING MATERIALS
MATIERES MOULABLES THERMOPLASTIQUES STABILISEES

(84) Benannte Vertragsstaaten:
**AT BE CH CY DE DK ES FI FR GB GR IE IT LI LU MC NL PT SE TR**

(30) Priorität: **31.05.2000 DE 10026858**

(43) Veröffentlichungstag der Anmeldung:
**12.03.2003 Patentblatt 2003/11**

(73) Patentinhaber: **BASF SE**
**67056 Ludwigshafen (DE)**

(72) Erfinder:
- **GÜNTHERBERG, Norbert**
**67346 Speyer (DE)**
- **CZAUDERNA, Bernhard**
**69493 Hirschberg (DE)**
- **ITTEMANN, Peter**
**68623 Lampertheim (DE)**

(56) Entgegenhaltungen:
**WO-A-01/23498** **DE-A- 1 694 101**
**DE-A- 1 802 552** **DE-A- 1 948 515**
**DE-A- 19 750 747**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Thermoplastische Formmassen, enthaltend, bezogen auf die Komponenten A) bis F),

A) 5 bis 70 Gew.-% mindestens eines Pfropfcopolymerisates A) aus, bezogen auf A,

a1) 10 bis 90 Gew.-% mindestens einer kautschukelastischen Pfropfgrundlage mit einer Glasübergangstemperatur unter 0°C, und
b2) 10 bis 90 Gew.-% mindestens einer Pfropfauflage aus, bezogen auf a2),

a21) 50 bis 100 Gew.-% mindestens einer Styrolverbindung,
a22) 0 bis 50 Gew.-% Acrylnitril oder Methacrylnitril oder deren Mischungen
a23) 0 bis 50 Gew.-% mindestens eines weiteren monoethylenisch ungesättigten Monomeren,

B) 29 bis 90 Gew.-% eines harten Copolymerisates aus, bezogen auf B),

b1) 50 bis 100 Gew.-% mindestens einer Styrolverbindung,
b2) 0 bis 50 Gew.-% Acrylnitril oder Methacrylnitril oder deren Mischungen,
b3) 0 bis 50 Gew.-% mindestens eines weiteren monoethylenisch ungesättigten Monomeren,

C) 0,01 bis 5 Gew.-% mindestens eines Dreiblockcopolymeren X-Y-X mit einem Mittelblock Y aus Propylenoxideinheiten und endständigen Blöcken X aus Ethylenoxideinheiten,

D) 0,01 bis 5 Gew.-% mindestens eines butylierten Reaktionsproduktes von p-Cresol mit Dicyclopentadien der Formel (I)

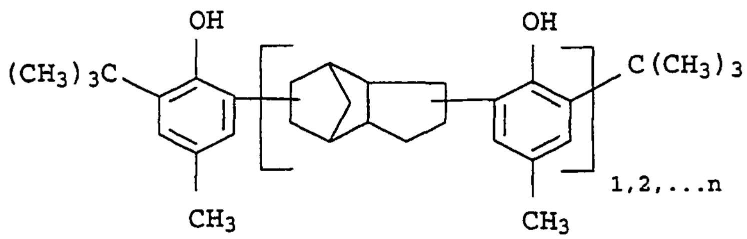

(I)

mit n ≤10,

E) 0,01 bis 5 Gew.-% mindestens eines Thiocarbonsäureesters,

F) 0,01 bis 5 Gew.-% mindestens eines Alkalimetallsalzes oder Erdalkalimetallsalzes einer $C_6$-$C_{20}$-Carbonsäure,

G) 0 bis 30 Gew.-%, bezogen auf die Komponenten A) bis G), weiterer üblicher Zusatzstoffe,

wobei die Formmassen nach 100 Stunden Belichtung und Bewitterung nach ISO 4892/2, Verfahren A, Schwarztafeltemperatur 65°C, bei der Farbmessung nach CIE-Lab gemäß DIN 6174 und DIN 5033 einen db*-Wert nach Bewitterung von weniger als +5,0 aufweisen.

Außerdem betrifft die Erfindung Verfahren zur Herstellung der Formmassen, die Verwendung der Formmassen zur Herstellung von Formkörpern, Fasern und Folien, sowie die Formkörper, Fasern und Folien.

Schlagzäh modifizierte Styrol/Acrylnitril-Polymerisate wie etwa ABS (Polybutadienkautschuk-Partikel, gepfropft mit Polystyrolacrylnitril, in Polystyrolacrylnitril-Matrix) oder ASA (Polyalkylacrylatkautschuk, ansonsten aufgebaut wie ABS) werden bei einer Vielzahl von Anwendungen eingesetzt. Bevorzugt verwendet man sie zur Herstellung von Formkörpern, die gute mechanische Eigenschaften aufweisen sollen. Oft ist es erforderlich, durch Zugabe von Additiven den Formmassen bestimmte Eigenschaften zu verleihen, etwa Antistatizität, besonders gute Beständigkeit gegen Witterungseinflüsse usw.

Die FR-PS 1 239 902 offenbart Thermoplastformmassen enthaltend ein Antistatikum, u.a. auch EO-PO-EO-Dreiblockcopolymere (EO Ethylenoxid, PO Propylenoxid).

Die EP-A 135 801 beschreibt Blends aus Polycarbonat, ABS oder ASA und einem EO-PO-EO-Dreiblockcopolymeren mit bestimmten Molmassen der einzelnen Blöcke.

Die EP-A 536 483 offenbart ABS-Formmassen, die ein PO-Polymer enthalten, dessen Enden mit EO verkappt sind und das 1,4-Butylenterephthalat-Einheiten enthält.

Die US-PS 5 346 959 beschreibt Blends aus ABS, Styrol-Maleinsäureanhydrid-Copolymer und OH-funktionalisierten PO-EO-PO-Blockcopolymeren (also ein Mittelblock aus EO).

Die DE-OS 16 940 101 beschreibt ABS-Formmassen, die mit einem phenolischen Stabilisator, Dilaurylthiodipropionat und $C_1$-$C_{20}$-Fettsäureestern (Butylstearat) stabilisiert sind.

Die GB-PS 1 369 589 offenbart Styrol-Butadien-Acrylnitril-Copolymere, die neben Asbestfasern auch phenolische Stabilisatoren und Dilaurylthiodipropionat enthalten.

Die EP-A 184 788 offenbart flammgeschützte ABS-Formmassen, die sterisch gehinderte Phenole und Costabilisatoren enthalten.

Die WO-A 95/02639 beschreibt die Stabilisierung von recycliertem, styrolhaltigen Kunststoffmaterial aus Abfällen und Wertstoffsammlungen. Als Stabilisatoren werden sterisch gehinderte Phenole, Metalloxide/-hydroxide/-carbonate, Ester der Thiodipropionsäure, und optional Metallsalze von Fettsäuren, verwendet.

Die WO-A 94/07951 offenbart die Stabilisierung von Kunststoffen aus Abfall mit einer Mischung aus einem sterisch gehinderten Phenol, einem organischen Phosphit oder Phosphonit und Metalloxiden/-hydroxiden/-carbonaten.

Die EP-A 506 614 beschreibt die Stabilisierung von recyclierten Thermoplasten mit sterisch gehinderten Phenolen und Phosphorsäureestern.

Die EP-A 669 367 beschreibt ABS-Formmassen, die mit einem Trialkylphenol, einem sterisch gehinderten Phenol und optional Dilauryl- bzw. Distearylthiodipropionsäureester stabilisiert sind.

Die EP-A 712 894 offenbart ABS-Formmassen und erwähnt u.a. sterisch gehinderte Phenole als Stabilisatoren.

Die DE-OS 197 50 747 beschreibt Alterungsschutzmittel für Styrolco- und terpolymere wie ABS, bestehend aus einem sterisch gehinderten Phenol, Dilauryl- und/oder Distearylthiodipropionat und einem Phosphit.

Keines der Dokumente offenbart schlagzähe Styrol-Acrylnitril-Formmassen, die alle drei Additive D), E) und F) wie zuvor beschrieben, gemeinsam enthalten, und nach 100 Stunden Belichtung und Bewitterung nach ISO 4892/2, Verfahren A, Schwarztafeltemperatur 65°C, bei der Farbmessung nach CIE-Lab gemäß DIN 6174 und DIN 5033 einen db*-Wert nach Bewitterung von weniger als +5,0 aufweisen.

Allen Formmassen des Standes der Technik ist gemein, daß die Stabilisierung der Formmasse gegen Bewitterung (Regen, UV-Licht) und Alterung in der Wärme (Wärmelagerung) unzureichend ist, oder nur auf Kosten anderer vorteilhafter Eigenschaften, insbesondere auf Kosten der guten mechanischen Eigenschaften wie etwa der Zähigkeit, erreicht wird.

Der Erfindung lag die Aufgabe zugrunde, diesen Nachteilen abzuhelfen. Insbesondere sollten naturfarbene Formmassen bereitgestellt werden, die insbesondere naturfarben (also ohne eine die Eigenfarbe der Formmassen überdeckende Zugabe von Farbmitteln) eine bessere Bewitterungsbeständigkeit und Wärmealterungsbeständigkeit (Wärmelagerungsbeständigkeit) aufweisen als die Formmassen des Standes der Technik, und die zugleich ein ausgewogenes Profil mechanischer Eigenschaften haben, insbesondere eine hohe Zähigkeit auch nach der Bewitterung und Wärmelagerung. Außerdem sollten die Formmassen eine gute Fließfähigkeit sowie gute antistatische Eigenschaften aufweisen. Die Farbänderung der Formmassen bei Bewitterung sollte gegenüber den Formmassen des Standes der Technik verringert sein.

Weiterhin sollten die Formmassen gewährleisten, daß die aus ihnen hergestellten Formteile eine verminderte Neigung zur Ausbildung von Staubfiguren aufweisen, wenn die Formteile in staubiger Atmosphäre gelagert werden. Außerdem sollten die Formmassen eine verbesserte Farbmitteldispergierung aufweisen, d.h. Farbmittel, z.B. Pigmente, sollten sich in den Formmassen besonders gleichmässig dispergieren lassen. Schließlich sollten die Formmassen bei der Spritzgußverarbeitung eine bessere Entformbarkeit aufweisen.

Demgemäß wurden die eingangs definierten thermoplastischen Formmassen gefunden, sowie Verfahren zu deren Herstellung, deren Verwendung und die daraus hergestellten Formkörper, Fasern und Folien.

In den erfindungsgemäßen Formmassen beträgt, jeweils bezogen auf die Komponenten A) bis F),

- der Anteil der Komponente A) 5 bis 70, bevorzugt 8 bis 65 und besonders bevorzugt 10 bis 60 Gew.-%,
- der Anteil der Komponente B) 29 bis 90, bevorzugt 34 bis 88 und besonders bevorzugt 39 bis 85 Gew.-%,
- der Anteil der Komponente C) 0,01 bis 5 bevorzugt 0,01 bis 4, insbesondere 0,01 bis 3 Ges.-%,
- der Anteil der Komponente D) 0,01 bis 5, bevorzugt 0,03 bis 4 und besonders bevorzugt 0,05 bis 3 Gew.-%,
- der Anteil der Komponente E) 0,01 bis 5, bevorzugt 0,03 bis 4 und besonders bevorzugt 0,05 bis 3 Gew.-%,
- der Anteil der Komponente F) 0,01 bis 5, bevorzugt 0,02 bis 4 und besonders bevorzugt 0,1 bis 3 Gew.-%,
- der Anteil der Komponente G), bezogen auf die Komponenten A) bis G), 0 bis 30, bevorzugt 0 bis 25 und besonders bevorzugt 0 bis 20 Ges-.-%.

Es versteht sich, daß sich die Summe der Komponenten A) bis G) zu 100 Gew.-% ergänzt.

Komponente A)

Komponente A) ist ein Pfropfcopolymerisat mit einer kautschukelastischen teilchenförmigen Pfropfgrundlage a1) mit einer Glasübergangstemperatur unter 0°C, gemessen mit Differential Scanning Calorimety (DSC) wie beschrieben in DIN 53765. Dabei kann die Pfropfgrundlage aus allen bekannten geeigneten kautschukelastischen Polymeren ausgewählt sein. Vorzugsweise handelt es sich um Dien-, Acrylat-, EPDM-, Siloxan- oder andere Kautschuke.

Vorzugsweise ist Komponente a1) mindestens ein (Co)polymerisat aus

a11) 60 bis 100 Gew.-%, vorzugsweise 70 bis 100 Gew.-% mindestens eines konjugierten Diens oder $C_{1-10}$-Alkylacrylats oder deren Mischungen,

a12) 0 bis 30 Ges.-%, vorzugsweise 0 bis 25 Gew.-% mindestens eines weiteren monoethylenisch ungesättigten Monomeren,

a13) 0 bis 10 Gew.-%, vorzugsweise 0 bis 6 Gew.-% mindestens eines vernetzenden Monomeren.

Als Monomere a11) kommen insbesondere Butadien, Isopren, Chloropren oder Gemische davon wie auch die nachstehend ausgeführten $C_{1-10}$-Alkylacrylate und Gemische davon in Betracht. Bevorzugt verwendet man Butadien oder Isopren oder deren Gemische, speziell Butadien, sowie n-Butylacrylat oder 2-Ethylhexylacrylat oder deren Gemische, speziell n-Butylacrylat. Ganz besonders bevorzugt verwendet man Butadien.

Gegebenenfalls können als Komponente a12) Monomere enthalten sein, die die mechanischen und thermischen Eigenschaften der Pfropfgrundlage in einem gewissen Bereich variieren. Als Beispiele derartiger monoethylenisch ungesättigter Comonomere können Styrol, substituierte Styrole, Acrylnitril, Methacrylnitril, Acrylsäure, Methacrylsäure, Dicarbonsäuren wie Maleinsäure und Fumarsäure sowie deren Anhydride wie Maleinsäureanhydrid, Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid, $C_{1-10}$-Alkylester der Acrylsäure wie Methylacrylat, Ethylacrylat, n-Propylacrylat, i-Propylacrylat, n-Butylacrylat, Isobutylacrylat, sec.-Butylacrylat, tert.-Butylacrylat, Ethylhexylacrylat, die entsprechenden $C_{1-10}$-Alkylester der Methacrylsäure sowie Hydroxyethylacrylat, aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat sowie 2-Phenoxyethylmethacrylat, N-substituierte Maleinimide wie N-Methyl-, N-Phenyl- und N-Cyclohexylmaleinimid, ungesättigte Ether wie Vinylmethylether sowie Gemische davon genannt werden.

Bevorzugt werden Styrol, α-Methylstyrol, n-Butylacrylat, Methylmethacrylat (MMA) oder deren Gemische als Komponente a12) eingesetzt, insbesondere Styrol und n-Butylacrylat oder deren Gemische, speziell Styrol. Sofern eine Komponente a12), jedoch keine Komponente a13) eingesetzt wird, beträgt der Anteil der Komponente a11) vorzugsweise 70 bis 99,9, besonders bevorzugt 90 bis 99 Gew.-% und der Anteil der Komponente a12) 0,1 bis 30, besonders bevorzugt 1 bis 10 Gew.-%. Besonders bevorzugt sind Butadien/Styrol- und n-Butylacrylat/Styrol-Copolymere in dem angegebenen Mengenbereich.

Beispiele für vernetzende Monomere der Komponente a13) sind Divinylverbindungen wie Divinylbenzol, Diallylverbindungen wie Diallylmaleat, Allylester der Acryl- und Methacrylsäure, Dihydrodicyclopentadienylacrylat (DCPA), Divinylester von Dicarbonsäuren wie der Bernsteinsäure und Adipinsäure, Diallyl- und Divinylether bifunktioneller Alkohole wie des Ethylenglykols und Butan-1,4-diols.

Die Pfropfauflage a2) erhält man aus, bezogen auf a2),

a21) 50 bis 100, bevorzugt 55 bis 90 und besonders bevorzugt 60 bis 85 Gew.-% mindestens einer Styrolverbindung,

a22) 0 bis 50, bevorzugt 10 bis 45 und besonders bevorzugt 15 bis 40 Gew.-% Acrylnitril oder Methacrylnitril oder deren Mischungen,

a23) 0 bis 50, bevorzugt 0 bis 30 und besonders bevorzugt 0 bis 10 Gew.-% mindestens eines weiteren monoethylenisch ungesättigten Monomeren.

Die Pfropfauflage a2) enthält mindestens eine Styrolverbindung a21). Bevorzugt sind Styrol, α-Methylstyrol oder andere substituierte Styrole, wobei diese Styrole am aromatischen System ein- oder mehrfach $C_1$-$C_8$-alkylsubstituiert sein können. Besonders bevorzugt verwendet man Styrol.oder α-Methylstyrol oder deren Mischungen, ganz besonders bevorzugt Styrol.

Als weitere monoethylenisch ungesättigte Monomeren a23) kommen diejenigen in Betracht, die bereits als Monomere a12) genannt wurden, bevorzugt Methylmethacrylat (MMA) und n-Butylacrylat, insbesondere bevorzugt MMA.

Die Pfropfauflage a2) ist vorzugsweise ein Styrol/Acrylnitril-Copolymerisat, insbesondere mit einem Acrylnitrilgehalt von 15 bis 40 Gew.-%. In einer besonderen, ebenfalls bevorzugten Ausführungsform enthält die Pfropfauflage a2) 16 bis 30, bevorzugt 17 bis 28, insbesondere 18 bis 25 Gew.-% Acrylnitril.

Üblicherweise werden die Pfropfcopolymerisate A) nach dem Verfahren der Emulsionspolymerisation hergestellt. Dabei polymerisiert man in der Regel bei einer Temperatur von 20 bis 100, bevorzugt 30 bis 80°C. Häufig werden übliche Emulgatoren mitverwendet, beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise verwendet man die Alkalimetallsalze, insbesondere die Natrium- oder Kaliumsalze von Alkylsulfonaten oder Fettsäuren mit 10 bis 18 Kohlenstoffatomen. In der Regel werden die Emulgatoren in Mengen von 0,2 bis 5 Gew.-%, insbesondere von 0,3 bis 3 Gew.-%, bezogen auf die bei der Herstellung der Pfropfgrundlage eingesetzten Monomere, eingesetzt.

Vorzugsweise verwendet man zur Herstellung der Dispersion soviel Wasser, daß die fertige Dispersion einen Feststoffgehalt von 20 bis 55 Gew.-% aufweist. Üblicherweise wird bei einem Wasser/Monomeren-Verhältnis von 2:1 bis 0,7:1 gearbeitet.

Zum Starten der Polymerisationsreaktion sind alle Radikalbildner geeignet, die bei der gewählten Reaktionstemperatur zerfallen, also sowohl solche, die die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxosulfate (etwa Natrium- oder Kaliumpersulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden. In der Regel werden die Polymerisationsinitiatoren in einer Menge von 0,1 bis 1 Gew.-%, bezogen auf die Pfropfgrundlage-Monomeren, eingesetzt.

Die Radikalbildner und auch die Emulgatoren werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt. Die kontinuierliche Zugabe kann auch entlang eines Gradienten erfolgen, der z.B. auf- oder absteigend, linear oder exponentiell, oder auch stufenweise (Treppenfunktion) sein kann.

Ferner kann man Molekulargewichtsregler wie Ethylhexylthioglycolat, n- oder t-Dodecylmercaptan oder andere Mercaptane, Terpinole und dimeres Methylstyrol oder andere zur Regelung des Molekulargewichts geeignete Verbindungen mitverwenden. Die Molekulargewichtsregler werden dem Reaktionsansatz diskontinuierlich oder kontinuierlich zugefügt, wie dies für die Radikalbildner und Emulgatoren zuvor beschrieben wurde.

Zur Einhaltung eines konstant bleibenden pH-Wertes, der vorzugsweise bei 6 bis 9 liegt, kann man Puffersubstanzen wie Natriumpyrophosphat, $Na_2HPO_4/NaH_2PO_4$, Natriumhydrogencarbonat oder Puffer auf Basis Citronensäure/Citrat, mitverwenden. Molekulargewichtsregler und Puffersubstanzen werden in den üblichen Mengen eingesetzt, so daß sich nähere Angaben hierzu erübrigen.

Auch kann es vorteilhaft sein, zur Einstellung der Teilchengrößen und ihrer Verteilung, weitere Elektrolyte (insbesondere Salze) zu verwenden.

Man kann die Pfropfgrundlage in einer besonderen Ausführungsform auch durch Polymerisation der Monomeren a1) in Gegenwart eines feinteiligen Latex herstellen (sog. "Saatlatex-Fahrweise" der Polymerisation). Dieser Latex wird vorgelegt und kann aus kautschukelastische Polymere bildenden Monomeren, oder auch aus anderen Monomeren, wie sie bereits genannt wurden, bestehen. Geeignete Saatlatices bestehen beispielsweise aus Polybutadien oder Polystyrol.

In einer anderen bevorzugten Ausführungsform kann man die Pfropfgrundlage a1) im sogenannten Zulaufverfahren herstellen. Bei diesem Verfahren wird ein bestimmter Anteil der Monomeren vorgelegt und die Polymerisation gestartet, wonach man den Rest der Monomeren ("Zulaufanteil") a1) als Zulauf während der Polymerisation zufügt. Die Zulaufparamater (Gestalt des Gradienten, Menge, Dauer, etc.) hängen von den anderen Polymerisationsbedingungen ab. Sinngemäß gelten auch hier die zur Zugabeweise des Radikalstarters bzw. Emulgators gemachten Ausführungen.

Weiterhin eignen sich auch Pfropfpolymerisate mit mehreren "weichen" und "harten" Schalen.

Die genauen Polymerisationsbedingungen, insbesondere Art, Menge und Dosierung des Emulgators und der anderen Polymerisationshilfsstoffe werden bevorzugt so gewählt, daß der erhaltene Latex des Pfropfpolymerisates A) eine mittlere Teilchengröße, definiert durch den $d_{50}$-Wert der Teilchengrößenverteilung, von 80 bis 800 nm, bevorzugt 80 bis 600 nm und besonders bevorzugt 85 bis 400 nm aufweist.

Gemäß einer Ausführungsform der Erfindung stimmt man die Reaktionsbedingungen so aufeinander ab, daß die Polymerisat-Teilchen eine bimodale oder polymodale Teilchengrößenverteilung aufweisen, also eine Größenverteilung mit mindestens zwei mehr oder weniger ausgeprägten Maxima.

Bevorzugt wird die bimodale Teilchengrößenverteilung durch eine (teilweise) Agglomeration der Polymerteilchen erzielt. Dazu kann beispielsweise wie folgt vorgegangen werden: Man polymerisiert die Monomeren, welche den Kern aufbauen, bis zu einem Umsatz von üblicherweise mindestens 90, bevorzugt größer 95 %, bezogen auf die eingesetzten Monomeren. Dieser Umsatz ist in der Regel nach 4 bis 20 Stunden erreicht. Der erhaltene Kautschuklatex

hat eine mittlere Teilchengröße $d_{50}$ von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymerisates. Vorzugsweise werden Dispersionen von Copolymerisaten von ($C_1$-$C_4$-Alkyl) -estern der Acrylsäure, vorzugsweise von Ethylacrylat, mit 0,1 bis 10 Gew.- % polare Polymerisate bildenden Monomeren, wie Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 90 bis 96 % Ethylacrylat und 4 bis 10 % Methacrylamid. Die Agglomerierdisperion kann gegebenenfalls auch mehrere der genannten Acrylesterpolymerisate enthalten.

Die Konzentration der Acrylesterpolymerisate in der zur Agglomeration verwendeten Dispersion soll im allgemeinen zwischen 3 und 40 Gew.-% liegen. Bei der Agglomeration werden 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Zugabe dauert üblicherweise etwa 1 bis 30 Minuten bei einer Temperatur zwischen 20 und 90°C, vorzugsweise zwischen 30 und 75°C.

Außer mittels einer Acrylesterpolymerisat-Dispersion kann der Kautschuklatex auch durch andere Agglomeriermittel wie Essigsäureanhydrid agglomeriert werden. Auch eine Agglomeration durch Druck oder Einfrieren (Druck- bzw. Gefrieragglomeration) ist möglich. Die genannten Methoden sind dem Fachmann bekannt.

Unter den genannten Bedingungen wird nur ein Teil der Kautschukteilchen agglomeriert, so daß eine bimodale Verteilung entsteht. Dabei liegen nach der Agglomeration im allgemeinen mehr als 50, vorzugsweise zwischen 60 und 95 % der Teilchen (Zahlen-Verteilung) im nicht agglomerierten Zustand vor. Der erhaltene teilagglomerierte Kautschuklatex ist verhältnismäßig stabil, so daß er ohne weiteres gelagert und transportiert werden kann, ohne daß Koagulation eintritt.

Um eine bimodale Teilchengrößenverteilung des Pfropfpolymerisa - tes A) zu erzielen, ist es auch möglich, zwei verschiedene Pfropfpolymerisate A') und A"), die sich in ihrer mittleren Teilchengröße unterscheiden, getrennt voneinander in üblicher Weise herzustellen und die Pfropfpolymerisate A') und A") im gewünschten Mengenverhältnis zusammenzugeben.

Die Herstellung der Pfropfauflage a2) kann unter den gleichen Bedingungen wie die Herstellung der Pfropfgrundlage a1) erfolgen, wobei man die Auflage a2) in einem oder mehreren Verfahrensschritten herstellen kann. Beispielsweise kann man bei einer zweistufigen Pfropfung zunächst Styrol bzw. α-Methylstyrol alleine und danach Styrol und Acrylnitril in zwei aufeinander folgenden Schritten polymerisieren. Diese zweistufige Pfropfung (zunächst Styrol, dann Styrol/Acrylnitril) ist eine bevorzugte Ausführungsform. Weitere Einzelheiten zur Herstellung der Pfropfpolymerisate A) sind in den DE-A 12 60 135 und 31 49 358 sowie EP-A 735 063 beschrieben.

Es ist vorteilhaft, die Pfropfpolymerisation auf die Pfropfgrundlage a1) wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung der Pfropfgrundlage a1) verwendeten Emulgatoren bzw. Initiatoren nicht identisch sein. So kann es z.B. zweckmäßig sein, als Initiator für die Herstellung der Pfropfgrundlage a1) ein Persulfat zu verwenden, zur Polymerisation der Pfropfhülle a2) jedoch ein Redoxinitiatorsytem einzusetzen. Im übrigen gilt für die Wahl von Emulgator, Initiator und Polymerisationshilfsstoffen das bei der Herstellung der Pfropfgrundlage a1) Gesagte. Das aufzupfropfende Monomerengemisch kann dem Reaktionsgemisch auf einmal, absatzweise in mehreren Stufen oder vorzugsweise kontinuierlich während eines bestimmten Zeitintervalls der Polymerisation zugegeben werden.

Soweit bei der Pfropfgrundlage a1) nicht gepfropfte Polymere aus den Monomeren a2) entstehen, werden die Mengen, die in der Regel unter 10 Gew. -% von a2) liegen, der Masse der Komponente A) zugeordnet.

Komponente B)

Komponente B) ist ein hartes Copolymerisat aus, bezogen auf B),

b1) 50 bis 100, bevorzugt 55 bis 90 und besonders bevorzugt 60 bis 85 Gew.-% mindestens einer Styrolverbindung,

b2) 0 bis 50, bevorzugt 10 bis 45 und besonders bevorzugt 15 bis 40 Gew.-% Acrylnitril oder Methacrylnitril oder deren Mischungen,

b3) 0 bis 50, bevorzugt 0 bis 30 und besonders bevorzugt 0 bis 20 Gew. -% mindestens eines weiteren monoethylenisch ungesättigten Monomeren.

Komponente B) weist vorzugsweise eine Viskositätszahl VZ (ermittelt nach DIN 53726 bei 25°C, 0,5 Gew.-% in Dimethylformamid) von 50 bis 120 ml/g, besonders bevorzugt 52 bis 110 ml/g und insbesondere 55 bis 105 ml/g auf.

Als Styrolverbindung b1) kommen die für a21) genannten Monomere in Betracht, insbesondere Styrol, α-Methylstyrol, und deren Mischungen. Bevorzugt beträgt des Anteil des α-Methylstyrols in einer solchen Mischung bis zu 50 Gew.-%, bezogen auf b1). Besonders bevorzugt verwendet man allein Styrol.

Als weitere monoethylenisch ungesättigte Monomere b3) kommen die für a12) bereits genannten Monomere in Betracht, insbesondere MMA sowie N-Alkyl- und N-Arylmaleinimide wie z.B. N-Phenylmaleinimid.

Besonders bevorzugt handelt es sich bei B) um ein Styrol/Acrylnitril-Copolymerisat. Besonders bevorzugt verwendet man ein Styrol-Acrylnitril-Copolymerisat mit 15 bis 40, insbesondere 20 bis 33 Gew.-% Acrylnitril als Komponente b2). Besonders bevorzugt enthält das Copolymerisat 22 bis 31, speziell 23 bis 29 Gew.-% Acrylnitril.

Derartige Copolymerisate erhält man in bekannter Weise durch Masse-, Lösungs-, Suspensions-, Fällungs- oder Emulsionspolymerisation, wobei Masse- und Lösungspolymerisation bevorzugt sind. Einzelheiten dieser Verfahren sind beispielsweise im Kunststoff-handbuch, Herausgeber R. Vieweg und G. Daumiller, Band V "Polystyrol", Carl Hanser-Verlag München 1969, Seite 118 ff. beschrieben.

Bevorzugt sind thermoplastische Formmassen, bei denen die Komponente a11) Butadien und die Komponente B) ein Styrol-Acrylnitril-Copolymerisat mit 10 bis 50, bevorzugt 22 bis 33 und insbesondere 23 bis 29 Gew.-% Acrylnitril ist.

Komponente C)

ist ein EO-PO-EO-Dreiblockcopolymeres (EO = Ethylenoxid, PO = Propylenoxid). Bevorzugt beträgt die mittlere Molmasse $\overline{M}_n$ des PO-Mittelblockes 2000 bis 4000, besonders bevorzugt 2200 bis 3800, insbesondere 2300 bis 3500, ganz besonders bevorzugt etwa 2300, etwa 2750 oder etwa 3250, jeweils ±10 %. Bevorzugt beträgt im Mittel der Anteil der endständigen EO-Blöcke zusammengenommen 3 bis 28, besonders bevorzugt 8 bis 24, insbesondere etwa 8 bis 14 oder 18 bis 24 Gew.-%, bezogen auf C).

Die Herstellung der eingesetzten Dreiblockcopolymere der Formel X-Y-X kann in an sich bekannter Weise (N. Schönfeldt, grenzflächenaktive Ethylenoxid-Addukte, wissenschaftliche Verlagsgesellschaft mbH Stuttgart, 1976, Seite 53 ff) durch Polymerisation erfolgen, wobei zunächst ein mittelständiger Polypropylenoxidblock Y hergestellt wird, an dessen beiden Enden je ein Block X aus Ethylenoxideinheiten angelagert wird. Bei den vorstehend angegebenen Molekulargewichten handelt es sich in der Regel um die mittleren Molekulargewichte (Zahlenmittel $\overline{M}_n$, beispielsweise bestimmt aus der OH-Zahl nach DIN 53240).

Bevorzugte Dreiblockcopolymere und deren Herstellung sind auch in EP-A 125 801 und EP-A 018 591 beschrieben.

Komponente C) ist im Handel z.B. als Pluronic® (Fa. BASF) erhältlich.

Komponente D)

ist ein butyliertes Reaktionsprodukt von Cresol mit Dicylopentadien der Formel (I) (n ≤ 10, bevorzugt ≤ 6)

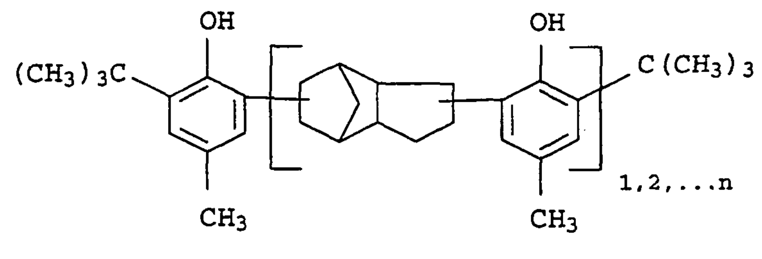

(I)

Bevorzugt verwendet man das Isomere der Formel (II)

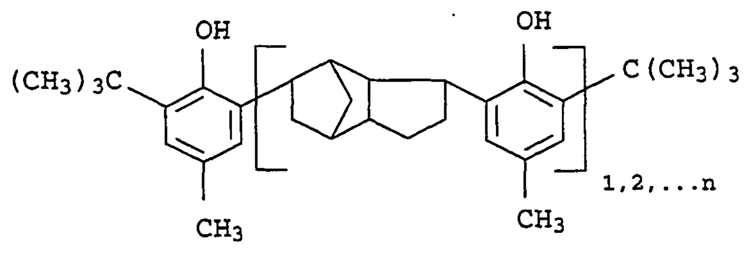

(II)

mit einer mittleren Molmasse von 600 bis 700.

Es ist im Handel z.B. als Santowhite®ML (Monsanto), Lowinox®22 CP46 bzw. Lowinox®CPL (Lowi/Great Lakes), Wingsty®L (Goodyear) oder Ralox®LC (Raschig) erhältlich.

Komponente E)

ist ein Thiocarbonsäureester. Bevorzugt sind $C_6$-$C_{20}$-Fettsäureester der Thiopropionsäure, besonders bevorzugt Stearylester und Laurylester. Ganz besonders bevorzugt verwendet man Thiodipropionsäuredilaurylester (= Dilaurylthiodipropionat), Thidipropionsäuredistearylester (= Distearylthiodipropionat) oder deren Mischungen.
Thiodipropionsäuredilaurylester ist z.B als Cyanox®LTDP (American Cyanamid), Hostanox®SE1 bzw. SE3 (Clariant); Irganox®PS 800 (Ciba-Geigy), Lowinox®DLTDP (Lowi) oder Sumilizer®TPLR (Sumitomo) im Handel erhältlich. Thiodipropionsäuredistarylester ist z.B. als Cyanox®STDP (American Cyanamid), Hostanox®SE2 bzw. SE4 (Clariant), Irganox®PS 802 (Ciba-Geigy), Lowinox®DSTDP (Lowi) und Sumilizer®TPS (Sumutomo) im Handel erhältlich. Auch die anderen geeigneten schwefelhaltigen Carbonsäureester sind bekannt und handelsüblich.

Komponente F)

ist ein Alkalimetallsalz oder Erdalkalimetallsalz einer $C_6$-$C_{20}$-Carbonsäure. Bevorzugt sind die Salze des Natriums und Kaliums sowie des Magnesiums, Calciums und Zinks. Bevorzugte Carbonsäurester sind diejenigen der Stearinsäure, Laurylsäure, Ölsäure und Palmitinsäure. Besonders bevorzugt verwendet man Calciumstearat, Zinkstearat, Magnesiumstearat, Kaliumstearat und Natriumstearat, speziell Mg- und K-Stearat.
Diese Stoffe sind bekannt und im Chemikalienhandel erhältlich.
Es versteht sich, daß bei allen Additiven C) bis F) auch Mischungen verschiedener Additive C’), C")... bis F’), F") ..., die unter die Definition des jeweiligen Additivs fallen, verwendet werden können.

Komponente G)

Als Komponente G) können weitere übliche von den Komponenten C) bis F) verschiedene Hilfs- und Füllstoffe eingesetzt werden. Derartige Stoffe sind beispielsweise Gleit- oder Entformungsmittel, Wachse, Pigmente, Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.
Geeignete Gleit- und Entformungsmittel sind z.B. Stearinsäuren, Starylalkohol, Stearinsäurester oder -amide sowie Siliconöle, Montanwachse und solche auf Basis von Polyethylen und Polypropylen.
Pigmente sind beispielsweise Titandioxid, Phthalocyanine, Ultramarinblau, Eisenoxide oder Ruß, sowie die gesamte Klasse der organischen Pigmente.
Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.
Als Flammschutzmittel können z.B. die dem Fachmann bekannten halogenhaltigen oder phosphorhaltigen Verbindungen, Magnesiumhydroxid, sowie andere gebräuchliche Verbindungen oder deren Mischungen verwendet werden. Ebenso ist roter Phosphor geeignet.
Geeignete Antioxidantien sind insbesondere sterisch gehinderte einkernige oder mehrkernige phenolische Antioxidantien, die auf verschiedene Weise substituiert und auch über Substituenten verbrückt sein können. Hierzu zählen neben monomeren auch oligomere Verbindungen, die aus mehreren phenolischen Grundkörpern aufgebaut sein können. Ferner kommen Hydrochinone und Hydrochinonanaloge und substituierte Verbindungen in Betracht, ebenso Antioxidantien auf Basis von Tocopherolen und deren Derivaten. Auch Mischungen verschiedener Antioxidantien können verwendet werden. Prinzipiell können alle handelsüblichen oder für Styrolcopolymere geeigneten Verbindungen eingesetzt werden.
Zusammen mit den zuvor beispielhaft genannten phenolischen Antioxidantien können sogenannte Costabilisatoren mitverwendet werden, insbesondere phosphor- oder schwefelhaltige Costabilisatoren. Solche P- oder S-haltigen Costabilisatoren sind dem Fachmann bekannt und handelsüblich.
Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin® kommerziell erhältlich sind.
Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Die einzelnen Zusatzstoffe werden in den jeweils üblichen Mengen verwendet, so daß sich nähere Angaben hierzu erübrigen.

Bewitterungsbeständigkeit

Die erfindungsgemäßen thermoplastischen Formmassen sind außerdem dadurch gekennzeichnet, daß sie bei Belichtung und Bewitterung nach ISO 4892/2, Verfahren A, Schwarztafeltemperatur 65°C, nach 100 Stunden Belichtung und Bewitterung und anschließender Farbmessung nach CIE-Lab gemäß DIN 6174 und DIN 5033 einen db*-Wert von weniger als +5,0 aufweisen. Dies ist gleichbedeutend mit einer hohen Bewitterungsbeständigkeit und einer guten Beständigkeit gegen Verfärbungen (Verfärbungsresistenz). CIE steht für Commission Internationale de l'Eclairage. Bevorzugt ist der db*-Wert kleiner als +3,0.

Bevorzugt weisen die Formmassen bei Belichtung und Bewitterung nach ISO 4892/2, Verfahren A, Schwarztafeltemperatur 65°C, nach 100 Stunden Belichtung und Bewitterung und anschließender Farbmessung nach DIN 5033 unter einem Beobachtungswinkel von 10° bei Tageslicht D65 und Auswertung nach DIN 6167 einen dG-Wert von weniger als +10,0 auf (= sehr hohe Bewitterungsbeständigkeit). Besonders bevorzugt liegt der dG-Wert unter +5,0, insbesondere unter +2,5.

Besonders bevorzugt weisen die Formmassen, sofern sie die Komponente C) enthalten, bei Belichtung und Bewitterung wie zuvor beschrieben einen db*-Wert kleiner +1,5 und einen dG-Wert kleiner +2,5 auf (= nochmals verbesserte Bewitterungsbeständigkeit).

Es versteht sich, daß sich diese Angaben auf die naturfarbenen (nicht mit Farbmitteln eingefärbten) Formmassen beziehen.

Die Farbmessung nach CIE-Lab ist z.B. in DIN 6174 in Verbindung mit DIN 5033 Teil 1-9, genau beschrieben. DIN 5033 definiert die Farbmessung, DIN 6174 die Auswertung dieser Messung nach CIE-Lab. Es wird ausdrücklich auf diese Normen verwiesen. Ergänzende Informationen findet der Fachmann in H. Völz, Industrielle Farbprüfung, Verlag VCH, Weinheim 1990, Seite 171ff, und A. Berger-Schunn, Praktische Farbmessung, Verlag Muster-Schmidt, Göttingen 1991, Seite 93ff.

db* ist die Differenz zweier b*-Werte. Die beiden b*-Werte werden nach CIE-Lab ermittelt und voneinander subtrahiert. db* ist demnach der Unterschied im b*-Wert zweier Messungen. Dabei wird der erste b*-Wert vor der 100stündigen Belichtung und Bewitterung der Probe ermittelt und der zweite db*-Wert danach.

Es gilt: db* = b* nach Bewitterung - b* vor Bewitterung. Ist db* positiv (positives Vorzeichen), so bedeutet dies eine Verschiebung des Farbeindrucks in Richtung gelb, also hin zu einem höheren Gelbwert der Probe. Ist db* negativ (negatives Vorzeichen), so bedeutet dies eine Verschiebung des Farbeindrucks in Richtung blau.

dG ist die Änderung des Gelbwertes, wobei der Gelbwert definiert ist als

$$G = \frac{1,301 \cdot X - 1,149 \cdot Z}{Y} \cdot 100$$

wobei X, Y, Z die Normfarbwerte nach DIN 5033 sind. Diese Formel gilt für die Messung nach DIN 5033 unter einem Beobachtungswinkel von 10° bei Tageslicht D65 und Auswertung nach DIN 6167. G wird berechnet nach obiger Gleichung. dG ist die Differenz zweier G-Werte. Dabei wird der erste G-Wert vor der 100-stündigen Belichtung und Bewitterung der Probe ermittelt, der zweite G-Wert danach. Es gilt: dG = G nach Bewitterung - G vor Bewitterung.

Verfahren zur Herstellung der Formmassen

Die Herstellung der Formmassen erfolgt vorzugsweise durch separates Herstellen der einzelnen Komponenten A), B), D), E) und F) und gegebenenfalls C) und G) und Vermischen der Komponenten.

Das Pfropfpolymerisat A) wird bevorzugt nach dem Verfahren der Emulsionspolymerisation hergestellt, wie es bereits beschrieben wurde. Dabei erhält man eine wässrige Dispersion.

Die erhaltene Dispersion des Pfropfpolymerisates A) kann entweder direkt mit den Komponenten B), D), E) und F) und ggf. C) und G) vermischt werden, oder sie kann zuvor aufgearbeitet werden. Letzteres Vorgehen ist eine der bevorzugten Ausführungsformen.

Die Aufarbeitung der Dispersion des Pfropfpolymerisates A) erfolgt in an sich bekannter Weise. Üblicherweise wird zunächst das Pfropfpolymerisat A) aus der Dispersion ausgefällt, beispielsweise durch Zugabe von fällend wirkenden Salzlösungen (wie Calciumchlorid, Magnesiumsulfat, Alaun) oder Säuren (wie Essigsäure, Salzsäure oder Schwefelsäure) oder auch durch Einfrieren (Gefrierkoagulation). Auch eine Ausfällung durch hohe Scherkräfte, die sog. Scherfällung, ist möglich, wobei die hohen Scherkräfte beispielsweise durch Rotor/Stator-Systeme oder Hindurchpressen der Dispersion durch einen engen Spalt erzeugt werden. Die wäßrige Phase kann in üblicher Weise, etwa durch Sieben, Filtrieren, Dekantieren oder Zentrifugieren, abgetrennt werden. Man erhält üblicherweise durch diese vorherige Abtrennung des Dispersionswassers wasserfeuchte Pfropfpolymerisate A) mit einem Restwassergehalt von bis zu 60 Gew.-%, bezogen auf A), wobei das Restwasser z.B. sowohl am Pfropfpolymerisat äußerlich anhaften als auch darin eingeschlossen sein kann.

Das Pfropfpolymerisat kann danach erforderlichenfalls in bekannter Weise weiter getrocknet werden, z.B, durch Warmluft oder mittels eines Stromtrockners. Ebenso ist es möglich, die Dispersion durch Sprühtrocknung aufzuarbeiten.

In einer bevorzugten Ausführungsform werden die Pfropfpolymerisate A) und die weiteren Komponenten B) bis G) in einer Mischvorrichtung vermischt, wobei eine im wesentlichen schmelzflüssige Polymermischung entsteht.

"Im wesentlichen schmelzflüssig" bedeutet, daß die Polymermischung neben dem überwiegenden, schmelzflüssigen (erweichten) Anteil noch einen gewissen Anteil fester Bestandteile enthalten kann, beispielsweise ungeschmolzene Füll- und Verstärkungsstoffe wie Glasfasern, Metallflocken, oder auch ungeschmolzene Pigmente, Farbstoffe etc. "Schmelzflüssig" bedeutet, daß die Polymermischung zumindest zähflüssig ist, sie also zumindest in dem Maß erweicht ist, daß sie plastische Eigenschaften hat.

Als Mischvorrichtungen werden solche verwendet, die dem Fachmann bekannt sind. Man kann die Komponenten A) bis G) beispielsweise durch gemeinsames Extrudieren, Kneten oder Verwalzen vermischen, wobei die Komponenten A) bis G) notwendigenfalls zuvor aus der bei der Polymerisation erhaltenen Lösung oder aus der wäßrigen Dispersion isoliert worden sind.

Im Falle des Einmischens einer oder mehrerer Komponenten in Form einer wäßrigen Dispersion bzw. einer wäßrigen oder nichtwäßrigen Lösung, wird das Wasser bzw. das Lösungsmittel über eine Entgasungseinheit aus der Mischvorrichtung, bevorzugt einem Extruder, entfernt.

Als Mischvorrichtungen für die Durchführung des erfindungsgemäßen Verfahrens sind beispielsweise diskontinuierlich arbeitende, beheizte Innenkneter mit oder ohne Stempel, kontinuierlich arbeitende Kneter wie z.B. kontinuierliche Innenkneter, Schneckenkneter mit axial oszillierenden Schnecken, Banbury-Kneter, weiterhin Extruder sowie Walzenstühle, Mischwalzwerke mit beheizten Walzen und Kalander, zu nennen.

Bevorzugt wird als Mischvorrichtung ein Extruder verwendet. Für die Schmelzextrusion sind beispielsweise Ein- oder Zweiwellenextruder besonders geeignet. Ein Zweiwellenextruder ist bevorzugt.

In manchen Fällen bewirkt die beim Vermischen durch die Mischvorrichtung eingebrachte mechanische Energie bereits ein Schmelzen der Mischung, sodaß die Mischvorrichtung nicht beheizt werden muß. Ansonsten wird die Mischvorrichtung in der Regel beheizt. Die Temperatur richtet sich nach den chemischen und physikalischen Eigenschaften der Komponenten A) bis G), und ist so zu wählen, daß eine im wesentlichen schmelzflüssige Polymermischung entsteht. Andererseits soll die Temperatur nicht unnötig hoch sein, um eine thermische Schädigung der Polymermischung zu vermeiden. Die eingebrachte mechanische Energie kann jedoch auch so hoch sein, daß die Mischvorrichtung sogar gekühlt werden muß. Üblicherweise betreibt man die Mischvorrichtung bei 150 bis 300, bevorzugt 180 bis 300°C.

In einer bevorzugten Ausführungsform erfolgt das Vermischen des Pfropfpolymerisates A) mit dem Polymerisat B) und den weiteren Komponenten C) falls vorhanden, D), E) und F) sowie ggf. G), in einem Extruder, wobei die Dispersion des Pfropfpolymerisates A) ohne vorherige Abtrennung des Dispersionswassers direkt in den Extruder eindosiert wird. Das Wasser wird üblicherweise entlang des Extruders über geeignete Entgasungsvorrichtungen entfernt. Als Entgasungsvorrichtungen können beispielsweise Entgasungsöffnungen, die mit Rückhalteschnecken versehen sind (welche das Austreten der Polymermischung verhindern), eingesetzt werden.

In einer anderen, ebenfalls bevorzugten Ausführungsform erfolgt das Vermischen des Pfropfpolymerisates A) mit dem Polymerisat B) und den weiteren Komponenten C) falls vorhanden, D), E) und F), sowie ggf. G) in einem Extruder, wobei das Pfropfpolymerisat A) zuvor z.B. durch Sieben, Filtrieren, Dekantieren oder Zentrifugieren vom Dispersionswasser abgetrennt wird. Man erhält durch diese vorherige Abtrennung des Dispersionswassers wasserfeuchte Pfropfpolymerisate A) mit einem Restwassergehalt von bis zu 60 Ges.-%, bezogen auf A), wobei das Restwasser z.B. sowohl am Pfropfpolymerisat äußerlich anhaften als auch darin eingeschlossen sein kann. Das vorhandene Restwasser kann dann, wie zuvor beschrieben, über Entgasungseinrichtungen des Extruders als Dampf entfernt werden.

In einer besonders bevorzugten Ausführungsform wird jedoch das Restwasser im Extruder nicht allein als Dampf entfernt, sondern es wird ein Teil des Restwassers mechanisch im Extruder entfernt und verlässt den Extruder in flüssiger Phase. Dazu wird im Extruder durch Stauelemente ein Druck aufgebaut, der das Wasser aus dem Polymerisat auspresst. Es fließt durch Entwässerungsöffnungen als flüssiges Wasser ab. Dem gleichen Extruder können das Polymerisat B) und die Komponenten C) falls vorhanden, D), E) und F) sowie ggf. G) zugeführt werden, sodaß als Produkt des Verfahrens die fertige Formmasse extrudiert wird.

Näheres zu diesem Verfahren ist beispielsweise der WO-A 98/13412 zu entnehmen, auf die hier ausdrücklich verwiesen wird.

Es ist jedoch auch möglich, das Pfropfpolymerisat A) zunächst wie gerade beschrieben durch Auspressen im

Extruder zu entwässern und das entwässerte Pfropfpolymerisat in einem zweiten Extruder oder einer anderen Mischvorrichtung mit den anderen Komponenten B) bis G) zu vermischen.

Wird ein Extruder zum Auspressen oder als Mischvorrichtung verwendet, so können, wie allgemein bekannt ist, die verschiedenen Zonen eines Extruders individuell geheizt oder gekühlt werden, um entlang der Schneckenachse ein optimales Temperaturprofil einzustellen. Weiterhin ist dem Fachmann geläufig, daß üblicherweise die einzelnen Abschnitte des Extruders verschieden lang sein können.

Die im Einzelfall zu wählenden Temperaturen und Längen der einzelnen Abschnitte unterscheiden sich in Abhängigkeit der chemischen und physikalischen Eigenschaften der Komponenten A) bis G) und deren Mengenverhältnissen. Gleiches gilt auch für die Schnekkendrehzahl, die innerhalb eines weiten Bereiches variieren kann. Nur beispielhaft sei eine Drehzahl der Extruderschnecken im Bereich von 100 bis 1200, bevorzugt 100 bis 350 $min^{-1}$ genannt.

Die in der Mischvorrichtung aus den Komponenten A) bis G) hergestellte im wesentlichen schmelzflüssige Polymermischung wird in einer bevorzugten Ausführungsform einem schnellen Abkühlen unterworfen.

Das schnelle Abkühlen erfolgt üblicherweise durch Inkontaktbringen der im wesentlichen schmelflüssigen Polymermischung (nachfolgend kurz als "Polymerschmelze" bezeichnet) mit einem kalten Medium oder mit einer kalten Oberfläche.

Dabei bedeutet "kalt" eine Temperatur, die soweit unter der Temperatur der Polymerschmelze liegt, daß die Polymerschmelze beim Inkontaktbringen schnell abkühlt. "Kalt" bedeutet demnach nicht in jedem Fall gekühlt. Beispielsweise kann eine 200°C heiße Polymerschmelze durch Wasser einem schnellem Abkühlen unterworfen werden, welches zuvor auf z.B. 30 bis 90°C erwärmt wurde. Entscheidend ist, das die Differenz zwischen der Polymerschmelzetemperatur und der Temperatur des kalten Mediums bzw. der kalten Oberfläche, zum schnellen Abkühlen der Schmelze ausreicht.

"Schnell" bedeutet, daß die Polymerschmelze in einem Zeitraum bis 10 sec, bevorzugt bis 5 sec und besonders bevorzugt bis 3 sec vom schmelzflüssigen in den festen Zustand überführt und abgekühlt wird.

Bevorzugt wird die Polymerschmelze mit einem kalten Medium schnell abgekühlt. Solche Medien können Gase oder Flüssigkeiten sein.

Beispielhaft seien für gasförmige kalte Medien (nachfolgend als "Kühlgas" bezeichnet) gekühlte oder ungekühlte Luft oder, insbesondere bei oxidationsempfindlichen Polymerschmelzen, Gase wie Kohlendioxid, Stickstoff oder Edelgase genannt. Bevorzugt wird als Kühlgas Luft oder Stickstoff verwendet. Das Kühlgas wird in der Regel auf die aus der Mischvorrichtung austretende Polymerschmelze geblasen.

Als flüssige kalte Medien (nachfolgend als "Kühlflüssigkeit" bezeichnet) können organische und anorganische Kühlflüssigkeiten, eingesetzt werden. Geeignete organische Kühlflüssigkeiten sind beispielsweise Öle und andere hochsiedende organische flüssige Stoffe die mit der abzukühlenden Polymerschmelze weder chemische noch physikalische Wechselwirkungen (z.B. Quellen, Anlösen, etc.) eingehen, also gegenüber der Polymerschmelze chemisch und physikalisch inert sind.

Bevorzugt werden anorganische Kühlflüssigkeiten verwendet, insbesondere wäßrige Lösungen und Wasser. Besonders bevorzugt ist Wasser, das gekühlt (Gefrierpunkt bis Raumtemperatur), ungekühlt oder temperiert (Raumtemperatur bis Siedepunkt) eingesetzt werden kann.

Die Kühlflüssigkeit wird in der Regel auf die austretende Polymerschmelze gesprüht; oder die Polymerschmelze tritt aus der Mischvorrichtung direkt in ein Bad aus der Kühlflüssigkeit aus. Man kann die Kühlflüssigkeit auch als breiten Flüssigkeitsstrahl (Schwall) auf die austretende Polymerschmelze aufbringen.

Ein Besprühen der Polymerschmelze mit Kühlflüssigkeit ist insbesondere bei der Verwendung von Mischvorrichtungen vorteilhaft, die Folien erzeugen (etwa Walzenstühle, Mischwalzwerke und Kalander). Die als Film austretende Polymerschmelze verfestigt sich durch das Besprühen mit Kühlflüssigkeit zu einer Folie.

Besonders bevorzugt tritt die Polymerschmelze aus der Mischvorrichtung direkt in ein Bad aus der Kühlflüssigkeit aus, ganz besonders bevorzugt in ein Bad aus Wasser.

Es ist auch möglich und in manchen Fällen bevorzugt, die aus der Mischvorrichtung austretende Polymerschmelze zunächst durch Inkontaktbringen mit einem Kühlgas, z.B. Aufblasen von temperierter Luft oder einem Schutzgas wie Stickstoffgas, nur geringfügig abzukühlen. Dadurch verfestigt sich lediglich die äußere Oberfläche der Schmelze, wohingegen das Innere des Polymeren noch schmelzflüssig bleibt. Das eigentliche schnelle Abkühlen erfolgt dann durch Inkontaktbringen der zuvor an der Oberfläche verfestigten Schmelze mit einer Kühlflüssigkeit, z.B. Wasser, wobei auch das Innere der Schmelze aushärtet.

Beispielsweise können die aus dem Düsenkopf des Extruders austretenden Stränge der Polymerschmelze durch Aufblasen von Luft zunächst oberflächlich verfestigt werden und die Stränge dann in ein Wasserbad überführt werden, wo die eigentliche, schnelle Abkühlung erfolgt.

Die durch das schnelle Abkühlen erstarrte Polymerschmelze kann in dem Fachmann bekannter Weise weiter verarbeitet werden. In der Regel wird das fest gewordene Polymere durch Mahlen, Schneiden, Granulieren oder andere Verfahren zerkleinert.

In einer besonders bevorzugten Ausführungsform wird das schnelle Abkühlen und die Zerkleinerung nach dem Verfahren der Unterwassergranulierung vorgenommen. Bei der Unterwassergranulierung tritt die Polymerschmelze aus

der Mischvorrichtung durch eine Düsenplatte aus, deren Bohrungen (Düsen) bevorzugt rund sind und die bevorzugt kreisförmig angeordnet sind. Die Düsenplatte befindet sich unter Wasser (oder einer anderen Kühlflüssigkeit) oder die Düsenplatte wird mit Wasser (oder einer anderen Kühlflüssigkeit) besprüht, was unter Schutzgas geschehen kann. Unmittelbar hinter der Düsenplatte an deren Außenseite befinden sich Schneidvorrichtungen, bevorzugt rotierende Messer, die das austretende Polymer abtrennen. Das Polymer wird demnach von rotierenden Messern abgetrennt und in Wasser (oder einer anderen Kühlflüssigkeit) schnell abgekühlt, wobei es zu in der Regel mehr oder weniger runden, perlförmigen Körnern erstarrt.

Bei der Düsenplatte sind jedoch auch andere als kreisförmige Anordnungen der Bohrungen und andere als runde Lochformen gebräuchlich.

In einer anderen Ausführungsform wird eine sog. Unterwasser-Stranggranulierung eingesetzt. Dabei tritt die Schmelze als Strang aus einer Düsenplatte aus, und wird sofort durch einen Wasser- oder Kühlmittelschwall benetzt und dadurch schnell abgekühlt, wonach die Stränge über eine schiefe Ebene in ein Wasserbad oder Kühlmittelbad eingeführt und nach dem Abkühlen granuliert werden.

In einer besonders bevorzugten Ausführungsform wird ein Extruder als Mischvorrichtung für die Komponenten A) bis G) mit der soeben beschriebenen Unterwassergranulierung verwendet. Die Austragsöffnung des Extruders ist in dieser Ausführungsform folglich eine unter Wasser befindliche (oder mit Wasser besprühte) Düsenplatte mit Schneidvorrichtungen, insbesondere rotierenden Messern.

Ein bevorzugtes Herstellungsverfahren ist demnach gekennzeichnet durch

1) Herstellen des Pfropfcopolymerisates A) nach dem Verfahren der Emulsionspolymerisation,
2) Vermischen des Pfropfcopolymerisates A) mit dem harten Copolymerisat B) und den weiteren Komponenten C) falls vorhanden, D), E), F) und G) falls vorhanden, in einer Mischvorrichtung, wobei eine im wesentlichen schmelzflüssige Polymermischung entsteht,
3) schnelles Abkühlen der im wesentlichen schmelzflüssigen Polymermischung innerhalb 10 sec.

Bevorzugt sind insbesondere thermoplastische Formmassen, enthaltend die zuvor beschriebenen Komponenten A), B), D), E), F), und ggf. C) und G), und Butadien als konjugiertes Dien a11), erhältlich durch

1) Herstellen der Pfropfpolymerisate A) nach dem Verfahren der Emulsionspolymerisation, wobei ein wasserfeuchtes Polymerisat A) erhalten wird, das bis zu 60 Gew.-%, bezogen auf A), Restwasser enthält,

2) Vermischen des wasserfeuchten Pfropfpolymerisates A) mit den weiteren Komponenten B) bis G) in einem Extruder, wobei eine im wesentlichen schmelzflüssige Polymermischung entsteht, und wobei mindestens 30 Gew.-% des Restwassers der wasserfeuchten Pfropfpolymerisates A) durch Druckaufbau im Extruder als flüssiges Wasser ausgepresst werden,

3) Schnelles Abkühlen der im wesentlichen schmelzflüssigen Polymermischung durch das Verfahren der Unterwassergranulierung innerhalb von 10 sec.

In einer anderen besonders bevorzugten Ausführungsform werden die Additive C) bis G) zu verschiedenen Zeitpunkten des Herstellungsverfahrens zugefügt. Beispielsweise können eine oder mehrere der Komponenten C) bis G) bereits der wässrigen Dispersion/Emulsion des Pfropfcopolymerisates A) (vor, während oder nach der Polymerisationsreaktion von A)) zugefügt werden, und die restlichen Komponenten werden zu einem späteren Zeitpunkt, beispielsweise während der Vermischung im Extruder oder anderen Mischvorrichtungen zugefügt.

In einer anderen besonders bevorzugten Ausführungsform teilt man eines, mehrere oder alle der Additive C) bis G) in zwei oder mehr Teile auf und gibt diese Teile zu verschiedenen Zeitpunkten des Herstellungsverfahrens zu. Beispielsweise kann man einen Teil der Komponenten D) und E) bereits der wässrigen Dispersion/Emulsion des Pfropfcopolymerisates A) (vor, während oder bevorzugt nach der Polymerisationsreaktion von A)) zufügen, und den verbliebenen Teil erst später während der Vermischung der Komponenten A) bis G) im Extruder oder anderen Mischvorrichtungen.

Ganz besonders bevorzugt gibt man einen Teil der Komponente D) und einen Teil der Komponente E) zu der Dispersion/Emulsion des Pfropfcopolymerisates A) hinzu, und den restlichen Teil von D) und E) während der Vermischung der Komponenten A) bis G) im Extruder.

Bevorzugt liegt zumindest derjenige Teil von D) und E), welcher der Pfropfcopolymerisat-Dispersion zugefügt wird, als wässrige Dispersion vor, d.h. man fügt der Dispersion von A) eine Dispersion von D) und E) (als Mischung oder getrennt in zwei Dispersionen) hinzu.

Bevorzugt beträgt der Anteil von Komponente D), welcher bereits der wässrigen Dispersion/Emulsion des Pfropfcopolymerisates A) zugefügt wird, 20 bis 100 Gew.-%, bezogen auf die Gesamtmenge von D). Für Komponente

E) beträgt der entsprechende Anteil bevorzugt 30 bis 100 Gew.-%, bezogen auf die Gesamtmenge von E).

Ein anderes bevorzugtes Herstellungsverfahren ist demnach gekennzeichnet durch

1) Herstellen des Pfropfcopolymerisates A) nach dem Verfahren der Emulsionspolymerisation,
2) Zugeben eines Teils oder der Gesamtmenge der Komponente D) und eines Teils oder der Gesamtmenge der Komponente E) zur wässrigen Dispersion bzw. Emulsion vor, während oder nach der Polymerisationsreaktion von A),
3) Zugeben des verbliebenen Teils, sofern vorhanden, der Komponenten D) und E), in eine Mischvorrichtung, in der die Komponenten A), B), C) falls vorhanden, E), F) und G) falls vorhanden, vermischt werden, wobei eine im wesentlichen schmelzflüssige Polymermischung entsteht,
4) schnelles Abkühlen der im wesentlichen schmelzflüssigen Polymermischung innerhalb 10 sec.

Eigenschaften der Formmassen:

Die erfindungsgemäßen Formmassen zeichnen sich durch eine sehr gute Beständigkeit gegen Witterungseinflüsse aus, und haben zugleich ein ausgewogenes Profil mechanischer Eigenschaften, insbesondere eine hohe Zähigkeit auch nach der Bewitterung bzw. nach der Wärmelagerung. Die gute Bewitterungsbeständigkeit bzw. Wärmealterungsbeständigkeit geht demnach nicht zu Lasten der mechanischen Eigenschaften. Die erfindungsgemäßen Formmassen weisen eine geringe Farbtonänderung bei Bewitterung bzw. nach der Wärmelagerung auf und bilden in staubiger Umgebung nur schwache Staubfiguren. Ihre Farbmitteldispergierung ist verbessert, ebenso ihre Entformbarkeit beim Spritzguss.

Aus den Formmassen lassen sich Formkörper, Fasern und Folien aller Art herstellen. Die erfindungsgemäßen thermoplastischen Formmassen können nach den bekannten Verfahren der Thermoplastverarbeitung verarbeitet werden, also z.B. durch Extrudieren, Spritzgießen, Kalandrieren, Hohlkörperblasen, Pressen oder Sintern.

Bei der Angabe der mittleren Teilchengröße d handelt es sich um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben.

Der $d_{10}$-Wert gibt denjenigen Teilchendurchmesser an, bei dem 10 Gew.-% aller Teilchen einen kleineren und 90 Gew.-% einen größeren Durchmesser haben. Umgekehrt gilt für den $d_{90}$-Wert, daß 90 Gew.-% aller Teilchen einen kleineren und 10 Gew.-% einen größeren Durchmesser haben als derjenige Durchmesser, der dem $d_{90}$-Wert entspricht. Der gewichtsmittlere Teilchendurchmesser $d_{50}$ bzw. volumenmittlere Teilchendurchmesser $D_{50}$ gibt denjenigen Teilchendurchmesser an, bei dem 50 Gew.-% bzw. Vol.-% aller Teilchen einen größeren und 50 Gew.-% bzw. Vol.-% einen kleineren Teilchendurchmesser aufweisen. $d_{10}$-, $d_{50}$- und $d_{90}$-Wert charakterisieren die Breite Q der Teilchengrößenverteilung, wobei $Q = (d_{90}-d_{10})/d_{50}$. Je kleiner Q ist, desto enger ist die Verteilung.

Beispiele:

Bestandteile der Formmassen:

Pfropfpolymer A:

A1: Durch Emulsionspolymerisation wurde ein Pfropfkautschuk hergestellt und agglomiert wie beschrieben in DE-AS 24 27 960, Spalte 6, Zeile 15 bis Spalte 7, Zeile 25. Der Pfropfkautschuk bestand aus 60 Gew.-Teilen Polybutadien-Pfropfgrundlage und 40 Gew.-Teilen Styrol-Acrylnitril-Copolymer-Pfropfauflage und hatte eine mittlere Teilchengröße $d_{50}$ von 176 nm. Die Pfropfauflage enthielt 30 Gew.-% Acrylnitril.

A2: Pfropfkautschuk wie bei A1 beschrieben, jedoch mittlere Teilchengröße $d_{50}$ 146 nm und Acrylnitrilgehalt der Pfropfauflage 20 Gew.-%.

Der erhaltenen Pfropfkautschuk-Dispersion wurden ggf. Additive C) bis G) in Form ihrer wässrigen Dispersion zugefügt, siehe Tabelle 2.

Die Pfropfkautschuk-Dispersion wurde (im Unterschied zur DE-AS 24 27 960) mit $MgSO_4$-Lösung koaguliert. Der koagulierte Kautschuk wurde vom Dispersionswasser abzentrifugiert und mit Wasser gewaschen. Man erhielt einen Kautschuk mit ca. 30 Gew-.% anhaftendem bzw. eingeschlossenem Restwasser.

Hartes Copolymerisat B:

Die Polymerisate B wurden nach dem Verfahren der kontinuierlichen Lösungspolymerisation hergestellt, wie es im Kunststoff-Handbuch, Hrg. R. Vieweg und G. Daumiller, Band V "Polystyrol", Carl-Hanser-Verlag München 1969, S 122 - 124, beschrieben ist. Tabelle 1 faßt die Zusammensetzungen und Eigenschaften zusammen.

Tabelle 1

| Komponente | B1 | B2 | B3 | B4 |
|---|---|---|---|---|
| Styrol [Gew.-%] | 65 | 76 | 65 | 75 |
| Acrylnitril [Gew.-%] | 35 | 24 | 35 | 25 |
| Viskositätszahl VZ[1)] [ml/g] | 60 | 64 | 80 | 81 |
| 1) bestimmt nach DIN 53726 als 0,5 Gew.-%ige Lösung in Dimethylformamid bei 25°C | | | | |

Dreiblockcopolymer C:

Es wurde der Ethylenoxid-Propylenoxid-Ethylenoxid-Dreiblockcopolymer Pluronic® von BASF verwendet. Die mittlere Molmasse $\overline{M}_n$ (Zahlenmittel, bestimmt aus der OH-Zahl nach DIN 53240) des PO-Mittelblocks betrug 2300 g/mol, und der Anteil der endständigen EO-Blöcke am Copolymer betrug zusammengenommen 10 Gew.-%, bezogen auf das Copolymer. Der PO-Anteil betrug demnach 90 Gew.-%, bezogen auf das Copolymer.

Komponente D:

Es wurde Wingstay® L von Goodyear verwendet = butyliertes Reaktionsprodukt von p-Cresol mit Dicyclopentadien der Formel II wie in der Beschreibung angegeben.

Komponente E:

Es wurde Irganox® PS 800 von Ciba verwendet = Thiodipropionsäuredilaurylester (= Dilaurylthiodipropionat).

Komponente F:

Es wurde Magnesiumstearat handelsüblicher Qualität verwendet.

Komponente G:

G1: Topanol® CA von ICI = 1,1,3-Tris(2'-methyl-4'-hydroxi-5'-tert.butyl-phenyl)butan

G2: Irgafos® 168 von Ciba = Tris-(2,4-bis(1,1-dimethylethyl) phenyl)-phosphit

G3: Lowinox® 44S36 von Lowi, ein schwefelhaltiger phenolischer Stabilisator = 4,4'-Thio-bis(2-tert.butyl-5-methylphenol)

Herstellung der Abmischungen:

Der abzentrifugierte, Restwasser-haltige Pfropfkautschuk A wurde vom Restwasser weitestgehend befreit. Dazu wurde der Kautschuk auf einem Extruder ZSK 30 von Werner und Pfleiderer bei 250 $min^{-1}$, 5 kg/h Durchsatz und 50°C entwässert. Die Entwässerung erfolgte durch druckaufbauende Stauzonen der Extruderschnecken und zugehörige Entwässerungsöffnungen, durch die das ausgepresste Restwasser aus dem Extruder austrat.

Der erhaltene weitestgehend entwässerte Kautschuk wurde auf einem Extruder ZSK 30 von Werner und Pfleiderer bei 250 $min^{-1}$, 10 kg/h Durchsatz und 250°C mit den weiteren Komponenten B) bis G) unter Verdampfen des restlichen Wassers innig vermischt. Die Formmasse wurde extrudiert und die Polymerschmelze einer schnellen Abkühlung unterworfen, indem sie in ein Wasserbad von ca. 40°C geleitet wurde. Die erstarrte Formmasse wurde granuliert.

Herstellung und Prüfung der Formteile:

Aus dem erhaltenen Granulat wurden durch Spritzguß bei 240°C Schmelzetemperatur und 60°C Formtemperatur Probekörper hergestellt.

Für die Bewitterungsversuche wurden Plättchen 60 x 60 x 2 mm hergestellt. Die Probekörper wurden gemäß ISO 4892/2, Verfahren A, Schwarztafeltemperatur 65°C, 100 Stunden belichtet und bewittert. Anschließend wurde eine Farbmessung nach CIE-Lab vorgenommen wie beschrieben in DIN 6174 in Verbindung mit DIN 5033 Teil 1-9.

Die in Tabelle 2 angegebenen dB- bzw. dG-Werte wurden wie folgt berechnet:

Für den db*-Wert wurde der b*-Wert vor der Belichtung und Bewitterung ermittelt und der b*-Wert danach. Es gilt: db* = b* nach Bewitterung - b* vor Bewitterung.

Für den dG-Wert wurde der Gelbwert G berechnet nach

$$G = \frac{1{,}301 \cdot X - 1{,}149 \cdot Z}{Y} \cdot 100$$

wobei X, Y, Z Normfarbwerte nach DIN 5033. Es wurde bei einem Beobachtungswinkel von 10° bei Tageslicht D65 gemessen und nach DIN 6167 ausgewertet. Es wurde der G-Wert vor der Belichtung und Bewitterung ermittelt, und der G-Wert danach. Es gilt: dG = G nach Bewitterung - G vor Bewitterung.

Für die Wärmelagerung wurden Probekörper (Zugstäbe) gemäß ISO 11403-3 (Part 3), Figure 1 auf Seite 5 ("Details of the ISO 294-2 small tensile specimen") mit den dort angegebenen Abmessungen hergestellt. Die Wärmelagerung erfolgte bei 90°C. Die Prüfung der Probekörper erfolgte nach ISO 11403-3, wobei die Schädigungsarbeit im Zugversuch gemessen wurde. In der nachfolgenden Tabelle ist die Änderung der Schädigungsarbiet nach 12 Wochen (2016 Stunden) Lagerung bei 90°C in Prozent angegeben, bezogen auf den Anfangswert A, der gleich 100 % gesetzt wurde. Um den Einfluß von Orientierungen und Relaxationserscheinungen im Probekörper auszuschließen, wurde als Anfangswert A der arithmetische Mittelwert aus den Messungen nach 48, 168 und 336 Stunden Wärmelagerung (2 Tage, 1 Woche und 2 Wochen) genommen.

Tabelle 2 fasst die Ergebnisse zusammen.

Tabelle 2: Zusammensetzung der Formmassen (in Gew.-Teilen) und Eigenschaften (V zum Vergleich, nb nicht bestimmt)

| Beispiel | 1* | 2* | 3* | 4* | 5* | 6 | 7* |
|---|---|---|---|---|---|---|---|
| Pfropfcopolymer A | 43<br>A1 | 43<br>A1 | 29<br>A2 | 29<br>A2 | 29<br>A2 | 29<br>A2 | 29<br>A2 |
| Copolymer B | 57<br>B1 | 57<br>B1 | 71<br>B2 | 71<br>B2 | 71<br>B2 | 71<br>B2 | 71<br>B2 |
| Dreiblockcopolymer C 2) | - | - | - | - | - | 0.5 | - |
| Wingstay® L D 1) | 0,4/<br>- | 0,2/<br>- | 0,2/<br>0,1 | 0,2/<br>0,15 | 0,2/<br>0,1 | 0,2/<br>0,15 | 0,6/<br>- |
| Dilaurylthiodipropionat E 1) | 0,8/<br>- | 0,4/<br>- | 0,4/<br>0,2 | 0,4/<br>0,15 | 0,4/<br>0,2 | 0,4/<br>0,15 | 1,2/<br>- |
| Magnesiumstearat F 2) | 0,25 | 0,25 | 0,25 | 0,25 | 0,25 | 0,25 | 0,25 |
| Weitere Additive G 2) | - | - | - | - | 0,1<br>G2 | - | - |
| *db**-Wert 3) | +0,2 | -0,2 | +2,3 | +2,4 | +1,8 | +1,1 | +2,0 |
| dG-Wert 3) | +0,6 | -0,6 | +4,7 | +4,9 | +3,7 | +2,2 | +4,0 |
| Änderung der Schädigungsarbeit 4) [% vom Ausgangswert A] | nb | nb | nb | 72 | 60 | 55 | 76 |

1) Zahl vor dem Schrägstrich: Menge, die in Form einer Dispersion von E zur Dispersion des Pfropfkautschuks A gegeben wurde, bezogen auf den Feststoffgehalt der Pfropfkautschukdispersion
Zahl hinter dem Schrägstrich: Menge, die bei der Herstellung der Formmasse zugegeben wurde

2) Zugabe bei der Herstellung der Formmassen

3) Ergebnis der Farbmessung nach 100 h Belichtung und Bewitterung

4) nach 12 Wochen Wärmelagerung bei 90°C

* Nicht erfindungsgemäss

| Beispiel | 8 * | V1 | V2 | V3 | V4 | V5 | V6 |
|---|---|---|---|---|---|---|---|
| Pfropfcopolymer A | 29<br>A2 | 30<br>A1 | 43<br>A1 | 29<br>A2 | 40<br>A2 | 29<br>A2 | 44<br>A1 |
| Copolymer B | 71<br>B2 | 70<br>B1 | 57<br>B3 | 71<br>B2 | 60<br>B4 | 71<br>B2 | 56<br>B1 |
| Dreiblockcopolymer C 2) | - | - | - | - | - | - | - |
| Wingstay® L D 1) | 0,2/<br>- | -/<br>- | -/<br>- | -/<br>- | -/<br>- | -/<br>0,25 | -/<br>- |
| Dilaurylthiodipropionat E 1) | 0,4/<br>0,2 | -/<br>0,2 | -/<br>0,2 | -/<br>0,2 | -/<br>0,2 | -/<br>- | -/<br>- |
| Magnesiumstearat F 2) | 0,25 | 0,25 | 0,25 | 0,25 | 0,25 | 0,25 | 0,25 |
| Weitere Additive G 2) | 0,1<br>G1 | 0,2<br>G3 +<br>0,1<br>G1 | 0,2<br>G3 +<br>0,1<br>G1 | 0,2<br>G3 +<br>0,1<br>G1 | 0,2<br>G3 +<br>0,1<br>G1 | 0,2<br>G3 | 0,2<br>G3 |
| db*-Wert 3) | +1,8 | +8,1 | +7,3 | +11,9 | +13,2 | +10,2 | +14,3 |
| dG-Wert 3) | +3,9 | +17,0 | +15,1 | +27,6 | +28,7 | +23,1 | +29,0 |
| Änderung der Schädigungsarbeit 4)<br>[% vom Ausgangswert A] | 54 | 8 | 10 | 15 | 8 | 53 | nb |

1) Zahl vor dem Schrägstrich: Menge, die in Form einer Dispersion von E zur Dispersion des Pfropfkautschuks A gegeben wurde, bezogen auf den Feststoffgehalt der Pfropfkautschukdispersion
Zahl hinter dem Schrägstrich: Menge, die bei der Herstellung der Formmasse zugegeben wurde
2) Zugabe bei der Herstellung der Formmassen
3) Ergebnis der Farbmessung nach 100 h Belichtung und Bewitterung
4) nach 12 Wochen Wärmelagerung bei 90°C

* Nicht erfindungsgemäss

Die Tabelle zeigt, daß nur diejenigen Formmassen, die - erfindungsgemäß - alle drei Additive D), E) und F) enthalten, eine hohe Bewitterungsbeständigkeit aufweisen (db*-Wert < +5,0, dG-Wert < +10,0). Eine besonders hohe Bewitterungsbeständigkeit zeigen Formmassen, die (bei gegebenem Kautschukgehalt der Formmasse von 29 Gew.-Teilen) zusätzlich die Komponente C) enthalten (Beispiel 7 mit db*-Wert < +1,5 und dG-Wert < +2,5).

Dagegen weisen Formmassen die - nicht erfindungsgemäß - eine oder mehrere der drei Additive D), E) und F) nicht enthalten, eine erheblich schlechtere Bewitterungsbeständigkeit auf. In den Beispielen V1 bis V4 fehlt Komponente D), in Beispiel V5 fehlt Komponente E) und in Beispiel V6 fehlen D) und E), wodurch sich in allen Fällen sehr hohe Werte für db* und dG ergeben: db* > +7, dG > 15.

Ferner zeigt die Tabelle, daß Formmassen, in denen - nicht erfindungsgemäß - eines oder mehrere der drei Additive D), E) und F) durch andere Additive (G1, G4) ersetzt wurden, deutlich schlechtere Bewitterungsbeständigkeiten haben als die erfindungsgemäßen Formmassen.

Schließlich ist ersichtlich, daß nur die erfindungsgemäßen Formmassen nach 12 Wochen Wärmelagerung noch gute Schädigungsarbeiten aufweisen. Bei den nicht erfindungsgemäßen Formmassen sinkt die Schädigungsarbeit stark ab auf bis zu 8 % des Ausgangswertes, wogegen sie bei den erfindungsgemäßen Formmassen 54 % oder mehr des Ausgangswertes beträgt. Die Wärmealterungsbeständigkeit der erfindungsgemäßen Formmassen ist demnach deutlich verbessert.

## Patentansprüche

1. Thermoplastische Formmassen, enthaltend, bezogen auf die Komponenten A) bis F),

   A) 5 bis 70 Gew.-% mindestens eines Pfropfcopolymerisates A) aus, bezogen auf A,

      a1) 10 bis 90 Gew.-% mindestens einer kautschukelastischen Pfropfgrundlage mit einer Glasübergangstemperatur unter 0°C, und
      b2) 10 bis 90 Gew.-% mindestens einer Pfropfauflage aus, bezogen auf a2),

         a21) 50 bis 100 Gew.-% mindestens einer Styrolverbindung,
         a22) 0 bis 50 Gew.-% Acrylnitril oder Methacrylnitril oder deren Mischungen
         a23) 0 bis 50 Gew.-% mindestens eines weiteren monoethylenisch ungesättigten Monomeren,

   B) 29 bis 90 Gew.-% eines harten Copolymerisates aus, bezogen auf B),

      b1) 50 bis 100 Gew.-% mindestens einer Styrolverbindung,
      b2) 0 bis 50 Gew.-% Acrylnitril oder Methacrylnitril oder deren Mischungen,
      b3) 0 bis 50 Gew.-% mindestens eines weiteren monoethylenisch ungesättigten Monomeren,

   C) 0,01 bis 5 Gew.-% mindestens eines Dreiblockcopolymeren X-Y-X mit einem Mittelblock Y aus Propylenoxideinheiten und endständigen Blöcken X aus Ethylenoxideinheiten,
   D) 0,01 bis 5 Gew.-% mindestens eines butylierten Reaktionsproduktes von p-Cresol mit Dicyclopentadien der Formel (I)

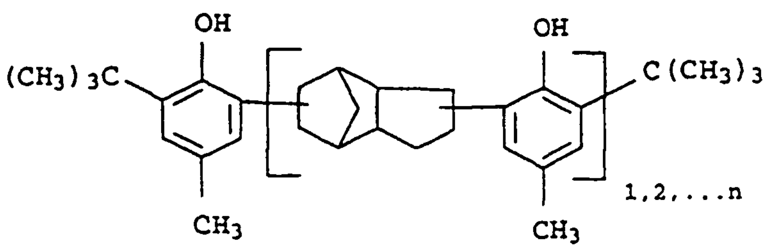

(I)

   mit n ≤ 10,
   E) 0,01 bis 5 Gew.-% mindestens eines Thiocarbonsäureesters,
   F) 0,01 bis 5 Gew.-% mindestens eines Alkalimetallsalzes oder Erdalkalimetallsalzes einer $C_6$-$C_{20}$-Carbonsäure,
   G) 0 bis 30 Gew.-%, bezogen auf die Komponenten A) bis G), weiterer üblicher Zusatzstoffe,

wobei die Formmassen nach 100 Stunden Belichtung und Bewitterung nach ISO 4892/2, Verfahren A, Schwarztafeltemperatur 65°C, bei der Farbmessung nach CIE-Lab gemäß DIN 6174 und DIN 5033 einen db*-Wert nach Bewitterung von weniger als +5,0 aufweisen.

**2.** Thermoplastische Formmassen nach Anspruch 1, wobei die Formmassen nach 100 Stunden Belichtung und Bewitterung nach ISO 4892/2, Verfahren A, Schwarztafeltemperatur 65°C bei der Farbmessung nach DIN 5033 unter einem Beobachtungswinkel von 10° bei Tageslicht D65 und Auswertung nach DIN 6167 einen dG-Wert von weniger als +10,0 aufweisen.

**3.** Thermoplastische Formmassen nach den Ansprüchen 1 und 2, bei denen die Pfropfgrundlage a1) ein Polymerisat ist aus, bezogen auf a1),

a11) 60 bis 100 Gew.-% mindestens eines konjugierten Diens oder $C_1$-$C_{10}$-Alkylacrylates oder deren Mischungen,
a12) 0 bis 30 Gew.-% mindestens eines weiteren monoethylenisch ungesättigten Monomeren,
a13) 0 bis 10 Gew.-% mindestens eines vernetzenden Monomeren.

**4.** Thermoplastische Formmassen nach Anspruch 3, bei denen die Komponente a11) Butadien und die Komponente B) ein Styrol-Acrylnitril-Copolymerisat mit 10 bis 50 Gew.-% Acrylnitril ist.

**5.** Thermoplastische Formmassen nach den Ansprüchen 3 und 4, bei denen die Komponente a11) Butadien und die Komponente B) ein Styrol-Acrylnitril-Copolymerisat mit 22 bis 33 Gew.-% Acrylnitril ist.

**6.** Thermoplastische Formmassen nach den Anspruchen 1 bis 5, bei denen der Propylenoxid-Mittelblock Y der Komponente C) eine mittlere Molmasse $\overline{M}_n$ (Zahlenmittel) von 2000 bis 4000 aufweist.

**7.** Thermoplastische Formmassen nach den Ansprüchen 1 bis 6, bei denen die Komponente E) Dilaurylthiodipropionat oder Distearylthiodipropionat oder deren Mischung, ist.

**8.** Thermoplastische Formmassen nach den Ansprüchen 1 bis 7, bei denen die Komponente F) Kaliumstearat oder Magnesiumstearat oder deren Mischung, ist.

**9.** Verfahren zur Herstellung der thermoplastischen Formmassen gemäß den Ansprüchen 1 bis 8, **gekennzeichnet durch**

1) Herstellen des Pfropfcopolymerisates A) nach dem Verfahren der Emulsionspolymerisation,
2) Vermischen des Pfropfcopolymerisates A) mit dem harten Copolymerisat B) und den weiteren Komponenten C) falls vorhanden, D), E), F) und G) falls vorhanden, in einer Mischvorrichtung, wobei eine im wesentlichen schmelzflüssige Polymermischung entsteht,
3) schnelles Abkühlen der im wesentlichen schmelzflüssigen Polymermischung innerhalb 10 sec.

**10.** Verfahren zur Herstellung der thermoplastischen Formmassen gemäß den Ansprüchen 1 bis 8, **gekennzeichnet durch**

1) Herstellen des Pfropfcopolymerisates A) nach dem Verfahren der Emulsionspolymerisation,
2) Zugeben eines Teils oder der Gesamtmenge der Komponente D) und eines Teils oder der Gesamtmenge der Komponente E) zur wässrigen Dispersion bzw. Emulsion vor, während oder nach der Polymerisationsreaktion von A),
3) Zugeben des verbliebenen Teils, sofern vorhanden, der Komponenten D) und E) in eine Mischvorrichtung, in der die Komponenten A), B), C) falls vorhanden, E), F) und G) falls vorhanden, vermischt werden, wobei eine im wesentlichen schmelzflüssige Polymermischung entsteht,
4) schnelles Abkühlen der im wesentlichen schmelzflüssigen Polymermischung innerhalb 10 sec.

**11.** Verwendung der thermoplastischen Formmassen gemäß den Ansprüchen 1 bis 8 zur Herstellung von Formkörpern, Fasern oder Folien.

**12.** Formkörper, Fasern oder Folien aus den thermoplastischen Formmassen gemäß den Ansprüchen 1 bis 8.

## Claims

1. A thermoplastic molding composition, comprising, based in each case on components A) to F),

A) from to 5 to 70% by weight of at least one graft copolymer A), composed of, based on A),

a1) from 10 to 90% by weight of at least one elastomeric graft base with a glass transition temperature below 0°C, and
b2) from 10 to 90% by weight of at least one graft composed of, based on a2),

a21) from 50 to 100% by weight of at least one styrene compound,
a22) from 0 to 50% by weight of acrylonitrile or methacrylonitrile, or a mixture of these,
a23) from 0 to 50% by weight of at least one other monoethylenically unsaturated monomer,

B) from 29 to 90% by weight of a hard copolymer composed of, based on B),

b1) from 50 to 100% by weight of at least one styrene compound,
b2) from 0 to 50% by weight of acrylonitrile or methacrylonitrile, or a mixture of these,
b3) from 0 to 50% by weight of at least one other monoethylenically unsaturated monomer,

C) from 0.01 to 5% by weight of at least one three-block copolymer X-Y-X having a middle block Y composed of propylene oxide units and having terminal blocks X composed of ethylene oxide units,
D) from 0.01 to 5% by weight of at least one butylated reaction product of p-cresol with dicyclopentadiene of the formula (I)

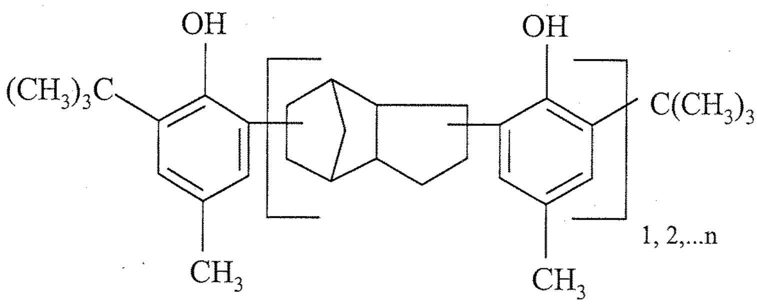

(I)

where n ≤ 10,
E) from 0.01 to 5% by weight of at least one thiocarboxylic ester,
F) from 0.01 to 5% by weight of at least one alkali metal salt or alkaline earth metal salt of a $C_6$-$C_{20}$ carboxylic acid,
G) from 0 to 30% by weight, based on components A) to G), of other conventional additives,

where the db* value after weathering of the molding compositions is less than +5.0 after 100 hours of photoirradiation and weathering to ISO 4892/2, method A, black-panel temperature 65°C, with color measurement by the CIELab method to DIN 6174 and DIN 5033.

2. The thermoplastic molding composition according to claim 1, where the dG value of the molding compositions is less than +10.0 after 100 hours of photoirradiation and weathering to ISO 4892/2, method A, black-panel temperature 65°C, with color measurement to DIN 5033, using an observer angle of 10° with D65 daylight and evaluation to DIN 6167.

3. The thermoplastic molding composition according to claims 1 and 2, in which the graft base a1) is a polymer composed of, based on a1),

a11) from 60 to 100% by weight of at least one conjugated diene or $C_1$-$C_{10}$-alkyl acrylate, or a mixture of these,
a12) from 0 to 30% by weight of at least one other monoethylenically unsaturated monomer,
a13) from 0 to 10% by weight of at least one crosslinking monomer.

**4.** The thermoplastic molding composition according to claim 3, in which component a11) is butadiene and component B) is a styrene-acrylonitrile copolymer having from 10 to 50% by weight of acrylonitrile.

**5.** The thermoplastic molding composition according to claims 3 and 4, in which component a11) is butadiene and component B) is a styrene-acrylonitrile copolymer having from 22 to 33% by weight of acrylonitrile.

**6.** The thermoplastic molding composition according to claims 1 to 5, in which the average molecular weight $M_n$ (number-average) of the propylene oxide middle block Y of component C) is from 2000 to 4000.

**7.** The thermoplastic molding composition according to claims 1 to 6, in which component E) is dilauryl thiodipropionate or distearyl thiodipropionate, or a mixture of these.

**8.** The thermoplastic molding composition according to claims 1 to 7, in which component F) is potassium stearate or magnesium stearate, or a mixture of these.

**9.** A process for preparation of the thermoplastic molding compositions according to claims 1 to 8, which comprises

1) preparation of the graft copolymer A) by the process of emulsion polymerization,
2) mixing of the graft copolymer A) with the hard copolymer B) and with the other components C), D), E), F) and G) if present, in a mixing apparatus, the product being a substantially molten polymer mixture,
3) rapid cooling of the substantially molten polymer mixture within a period of 10 seconds.

**10.** A process for preparation of the thermoplastic molding compositions according to claims 1 to 8, which comprises

1) preparation of the graft copolymer A) by the process of emulsion polymerization,
2) addition of a portion or the entire amount of component D) and a portion or the entire amount of component E) to the aqueous dispersion or emulsion prior to, during, or after the polymerization reaction of A),
3) addition of any remaining portion of components D) and E) into a mixing apparatus in which components A), B), C), E), F) and G) if present, are mixed, the product being a substantially molten polymer mixture,
4) rapid cooling of the substantially molten polymer mixture within a period of 10 seconds.

**11.** The use of the thermoplastic molding compositions according to claims 1 to 8 for production of moldings, fibers, or foils.

**12.** A molding, a fiber, or a foil composed of the thermoplastic molding compositions according to claims 1 to 8.

**Revendications**

**1.** Masses de moulage thermoplastiques, contenant, par rapport aux composants A) à F),

A) 5 à 70% en poids d'au moins un copolymère greffé A) constitué par, par rapport à A),

a1) 10 à 90% en poids d'au moins une base de greffage élastique caoutchouteuse présentant une température de transition vitreuse inférieure à 0°C, et
b2) 10 à 90% en poids d'au moins une charge de greffage constituée par, par rapport à a2),

a21) 50 à 100% en poids d'au moins un composé de styrène,
a22) 0 à 50% en poids d'acrylonitrile ou de méthacrylonitrile ou leurs mélanges,
a23) 0 à 50% en poids d'au moins un autre monomère éthyléniquement monoinsaturé,

B) 29 à 90% en poids d'un copolymère dur constitué par, par rapport à B),

b1) 50 à 100% en poids d'au moins un composé de styrène,
b2) 0 à 50% en poids d'acrylonitrile ou de méthacrylonitrile ou leurs mélanges,
b3) 0 à 50% en poids d'au moins un autre monomère éthyléniquement monoinsaturé,

C) 0,01 à 5% en poids d'au moins un copolymère à trois blocs X-Y-X avec un bloc central Y constitué par des unités d'oxyde de propylène et des blocs terminaux X constitués par des unités d'oxyde d'éthylène,

D) 0,01 à 5% en poids d'au moins un produit de réaction butylé du p-crésol avec du dicyclopentadiène de formule (I)

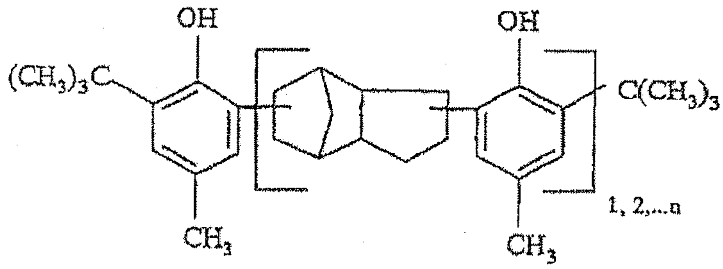

(I)

avec n ≤ 10,

E) 0,01 à 5% en poids d'au moins un ester de l'acide thiocarboxylique,

F) 0,01 à 5% en poids d'au moins un sel de métal alcalin ou alcalino-terreux d'un acide $C_6$-$C_{20}$-carboxylique,

G) 0 à 30% en poids, par rapport aux composants A) à G), d'autres additifs usuels,

les masses de moulage présentant, après une illumination pendant 100 heures et une exposition aux intempéries selon ISO 4892/2, procédé A, température de corps noir de 65°C, lors de la mesure de la couleur selon CIE-Lab selon DIN 6174 et DIN 5033 une valeur db* après exposition aux intempéries inférieure à + 5,0.

**2.** Masses de moulage thermoplastiques selon la revendication 1, dans lesquelles les masses de moulage présentent, après une illumination pendant 100 heures et une exposition aux intempéries selon ISO 4892/2, procédé A, température de corps noir de 65°C, lors de la mesure de la couleur selon DIN 5033 à un angle d'observation de 10° à la lumière naturelle D65 et l'évaluation selon DIN 6167, une valeur dG inférieure à + 10,0.

**3.** Masses de moulage thermoplastiques selon les revendications 1 et 2, dans lesquelles la base de greffage a1) est un polymère constitué par, par rapport à a1),

a11) 60 à 100% en poids d'au moins un diène conjugué ou d'acrylate d'alkyle en $C_1$-$C_{10}$ ou leurs mélanges,

a12) 0 à 30% en poids d'au moins un autre monomère éthyléniquement monoinsaturé,

a13) 0 à 10% en poids d'au moins un monomère réticulant.

**4.** Masses de moulage thermoplastiques selon la revendication 3, dans lesquelles le composant a11) est le butadiène et le composant B) est un copolymère de styrène/acrylonitrile avec une teneur en acrylonitrile de 10 à 50% en poids.

**5.** Masses de moulage thermoplastiques selon les revendications 3 et 4, dans lesquelles le composant a11) est le butadiène et le composant B) est un copolymère de styrène/acrylonitrile avec une teneur en acrylonitrile de 22 à 33% en poids.

**6.** Masses de moulage thermoplastiques selon les revendications 1 à 5, dans lesquelles le bloc central oxyde de propylène Y du composant C) présente une masse molaire moyenne $\overline{M}_n$ (moyenne en nombre) de 2000 à 4000.

**7.** Masses de moulage thermoplastiques selon les revendications 1 à 6, dans lesquelles le composant E) est le thiodipropionate de dilauryle ou le thiodipropionate de distéaryle ou leurs mélanges.

**8.** Masses de moulage thermoplastiques selon les revendications 1 à 7, dans lesquelles le composant F) est le stéarate de potassium ou le stéarate de magnésium ou leurs mélanges.

**9.** Procédé pour la préparation des masses de moulage thermoplastiques selon les revendications 1 à 8, **caractérisé par**

1) la préparation du copolymère greffé A) selon le procédé de polymérisation en émulsion,

2) le mélange du copolymère greffé A) avec le copolymère dur B) et les autres composants C) le cas échéant, D), E), F) et G) le cas échéant, dans un dispositif de mélange, avec formation d'un mélange de polymères essentiellement sous forme de masse fondue liquide,

3) le refroidissement rapide du mélange de polymères essentiellement sous forme de masse fondue liquide en 10 secondes.

**10.** Procédé pour la préparation des masses de moulage thermoplastiques selon les revendications 1 à 8, **caractérisé par**

1) la préparation du copolymère greffé A) selon le procédé de polymérisation en émulsion,
2) l'addition d'une partie ou de la quantité totale du composant D) et d'une partie ou de la quantité totale du composant E) à la dispersion ou l'émulsion aqueuse avant, pendant ou après la réaction de polymérisation de A),
3) l'addition de la partie résiduelle, le cas échéant, des composants D) et E) dans un dispositif de mélange, dans lequel les composants A), B), C) le cas échéant, E), F) et G) le cas échéant, sont mélangés, avec formation d'un mélange de polymères essentiellement sous forme d'une masse fondue liquide,
4) le refroidissement rapide du mélange de polymères essentiellement sous forme de masse fondue liquide en 10 secondes.

**11.** Utilisation des masses de moulage thermoplastiques selon les revendications 1 à 8 pour la préparation de corps façonnés, de fibres ou de feuilles.

**12.** Corps façonnés, fibres ou feuilles en masses de moulage thermoplastiques selon les revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- FR PS1239902
- EP 135801 A
- EP 536483 A
- US PS5346959 A
- DE OS16940101 A
- GB PS1369589 A
- EP 184788 A
- WO 9502639 A
- WO 9407951 A
- EP 506614 A
- EP 669367 A
- EP 712894 A
- DE OS19750747 A
- DE 1260135 A
- DE 3149358 A
- EP 735063 A
- EP 125801 A
- EP 018591 A
- WO 9813412 A
- DE S2427960 A


### In der Beschreibung aufgeführte Nicht-Patentliteratur


- Polystyrol. Kunststoff-Handbuch. Carl-Hanser-Verlag, 1969, vol. V, 122-124